# EUROPÄISCHE PATENTSCHRIFT

(11) **EP 3 530 340 B1**
(45) Veröffentlichungstag und Bekanntmachung des Hinweises auf die Patenterteilung: **23.12.2020**
(21) Anmeldenummer: 18400005.7
(22) Anmeldetag: 27.02.2018
(51) Int. Cl.: B01D 53/14, C10K 1/16, C01B 3/52, C10K 1/08, C10K 1/26, C10K 1/00, B01D 3/14, B01D 11/02, C10K 1/14

(54) **VERFAHREN UND ANLAGE ZUR ABTRENNUNG ACIDER GASBESTANDTEILE AUS METALLCARBONYLE ENTHALTENDEM SYNTHESEGAS**
PROCESS AND APPARATUS FOR THE REMOVAL OF ACID COMPONENTS FROM A SYNTHESIS GAS CONTAINING METAL CARBONYLES
PROCÉDÉ ET DISPOSITIF POUR SÉPARER COMPOSÉS ACIDES DU GAZ DE SYNTHÈSE CONTENANT CARBONYLES DE MÉTAUX

(43) Veröffentlichungstag der Anmeldung: 28.08.2019
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Gubrinski, Alfred, 64390 Erzhausen (DE); Gomez-Lozano, Diana-Maria, 60486 Frankfurt am Main (DE); Rappold, Dorit, 60487 Frankfurt am Main (DE); Schmidt, Sophia, 60486 Frankfurt am Main (DE)
(74) Vertreter: Dropsch, Holger

(56) Entgegenhaltungen:
- DE-A1- 2 759 124
- DE-A1- 10 336 677
- DE-A1- 19 716 310

## Beschreibung

### Gebiet der Erfindung

Die Erfindung betrifft ein Verfahren zur Abtrennung unerwünschter, insbesondere acider Gasbestandteile, beispielsweise Kohlendioxid und Schwefelwasserstoff, aus einem Metallcarbonyle enthaltendem Rohsynthesegas durch Gaswäsche mit einem Waschmittel. Die Erfindung betrifft ferner eine Anlage zur Durchführung eines solchen Verfahrens.

### Stand der Technik

Verfahren zur Abtrennung von unerwünschten Begleitstoffen aus technischen Rohgasen mittels physikalischer oder chemischer Absorption oder Gaswäsche sind aus dem Stand der Technik wohlbekannt. So können mit solchen Verfahren unerwünschte, acide Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch weitere Bestandteile wie Carbonylsulfid (COS) und Cyanwasserstoff (HCN), von den erwünschten Synthesegasbestandteilen Wasserstoff (H₂) und Kohlenmonoxid (CO) sicher bis in den Spurenbereich entfernt werden. Ein bekanntes und häufig angewendetes Verfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Störkomponenten durch kaltes, d. h. signifikant unter Umgebungstemperatur abgekühltes Methanol als Absorbens oder Waschmittel, wobei in einer Absorberkolonne, auch als Waschkolonne bezeichnet, ein intensiver Stoffaustausch zwischen dem Rohgas und dem Absorptionsmittel bzw. Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität und somit gute Stoff- und Wärmeübertragungseigenschaften aufzuweisen.

Das als Waschmittel verwendete, mit den Störkomponenten beladene Methanol wird im Rectisol-Verfahren über Regenerierungsvorrichtungen im Kreis gefahren. In den Regenerierungsvorrichtungen wird das beladene Methanol von den absorbierten Gasen auf physikalischem Wege befreit. Dabei wird in einem ersten Regenerierungsschritt CO₂ durch Druckentspannung (sogenannte Flashregenerierung) und/oder Strippen mit einem Gas, beispielsweise Stickstoff, aus dem beladenen Methanol-Waschmittel entfernt. In einem weiteren oder alternativen Regenerierungsschritt werden die schwefelhaltigen Gase, COS und H₂S, durch Erhitzen abgetrieben (sogenannte Heissregenerierung), Häufig wird angestrebt, ein möglichst CO₂-freies COS/H₂S-Gas zu erzeugen, da dessen wirtschaftlich interessante Weiterverarbeitung durch eine Vermischung mit CO₂ beeinträchtigt wird.

Beim Rectisol-Verfahren wird zwischen dem Standardverfahren und dem selektiven Rectisol-Verfahren unterschieden. Bei dem Standard-Rectisol-Verfahren werden die Begleitgase COS/H₂S und das CO₂ gemeinsam in einem Absorptionsschritt aus dem Rohsynthesegas abgetrennt. Dagegen werden bei dem sogenannten selektiven Rectisol-Verfahren die schwefelhaltigen Begleitgase COS/H₂S und das CO₂ jeweils in separaten, nacheinander ablaufenden Absorptionsschritten aus dem Rohsynthesegas abgetrennt. Diese selektive Absorption wird durch geeignete Einstellung der Verfahrensparameter, insbesondere des Mengenverhältnisses von Waschmittel und zu absorbierendem Gas, ermöglicht. Der Vorteil der selektiven Absorption liegt darin, dass das COS/H₂S- und das CO₂-Gas schon bei der Absorption zum größten Teil getrennt gehalten werden und nur der kleinere Teil bei der Regenerierung des Methanols getrennt werden muss. Auf diese Weise wird zudem die Gewinnung des enthaltenen Schwefels mit Hilfe von nachgeschalteten Verfahren wie beispielsweise dem Claus-Verfahren ermöglicht.

Nach Durchlaufen von zumeist mehreren Regenerierungsschritten werden mehrere Teilströme des von den Störkomponenten befreite Waschmittels, beim Rectisol-Verfahren also klassischerweise das Methanol, zu der Absorberkolonne zurückgeführt. Das durch Heissregenerierung regenerierte Waschmittel weist dabei die höchste Reinheit auf und wird daher zur Feinwäsche bzw. Feinabsorption von bereits vorgereinigtem Synthesegas verwendet; es stellt somit die abschließende Waschstufe dar, bevor das gereinigte Synthesegas als Reinsynthesegas die Absorberkolonne üblicherweise an deren oberem Ende verlässt. Das durch Flashregenerierung regenerierte Waschmittel weist eine etwas geringere Reinheit auf und ist insbesondere noch mit Kohlendioxid teilbeladen. Dieses Waschmittel wird in der sogenannten CO₂-Hauptwäsche eingesetzt, die aus der Perspektive des die Absorberkolonne durchlaufenden Synthesegases stromaufwärts der Feinwäsche angeordnet ist, üblicherweise also unterhalb der Feinwäschestufe.

Als Sumpfprodukt der Heissregenerierung wird ein wasserhaltiger Methanolstrom erhalten, der zu einer Methanol-Wasser-Trennkolonne geführt und dort destillativ aufgetrennt wird. Als Kopfprodukt dieser Destillation wir ein Methanolstrom erhalten, der an Wasser abgereichert ist und in das Verfahren zurückgeführt wird. Das als Sumpfprodukt erhaltene Wasser wird aus dem Verfahren ausgeleitet.

Es ist bekannt, dass bei der Herstellung von Synthesegas aus schwermetallhaltigen Brennstoffen Metallcarbonyle entstehen, die den Einsatz von Synthesegas bei einer Vielzahl von chemischen Synthesen beeinträchtigen. Aus diesen Metallcarbonylen entstehen innerhalb des Rectisol-Verfahrens in Gegenwart von H₂S feindisperse bzw. kolloidale Metallsulfide, die an ihnen zugänglichen Oberflächen anbacken, was in kurzer Zeit zu Verlegungen oder Verstopfungen der betroffenen Anlagenteile führt. Besonders in der Heissregenerierung bestehen aufgrund der dort herrschenden Temperaturen und der Anwesenheit von H₂S günstige Bedingungen zum Zersetzen der im Methanol gelösten Metallcarbonyle und der nachfolgenden Bildung der entsprechenden Metallsulfide.

Ein Verfahren zum Reinigen von Metallcarbonyle enthaltendem Synthesegas durch eine Tieftemperaturgaswäsche mit Methanol und anschließende Regenerierung des Methanols durch Entspannen, Evakuieren, Austreiben und Erhitzen mit zusätzlicher Behandlung in einem Vorreaktor ist in der deutschen Patentschrift DE 26 10 582 näher beschrieben. Mit diesem Verfahren sollen Ablagerungen von unlöslichen Schwermetallverbindungen, insbesondere von aus den Metallcarbonylen entstehenden Metallsulfiden, in den Regenerierungskolonnen von Gaswäschen verhindert und deren Betriebszeiten so verlängert werden. Allerdings gelangen auch bei Anwendung dieses Verfahrens nicht im Vorreaktor umgewandelte Metallcarbonyle, im Vorwaschmethanol gelöste Carbonyle sowie im Vorreaktor ausgegaste Metallcarbonyle immer noch zum Teil in das für weitere chemische Reaktionen vorgesehene Synthesegas.

Ein weiteres Verfahren zur Entfernung von Metallcarbonylverbindungen im Rahmen des Reinigens von Synthesegasen durch Tieftemperaturgaswäsche ist aus der deutschen Offenlegungsschrift DE 43 36 790 bekannt. Bei diesem Verfahren wird vor Eintritt in eine Regenerierkolonne ein stark beladener und ein schwach beladener Teilstrom mit Waschflüssigkeit erhitzt und je einem Reaktor zugeführt. Der schwach beladene Teilstrom der Waschflüssigkeit wird dann gemeinsam mit dem Kondensat, das bei der Teilkondensation der Dämpfe aus dem Kondensationssystem der Regenerierkolonne anfällt, jeweils einem separaten Verweilzeitreaktor zugeführt. Auch dieses Verfahren erlaubt jedoch keine vollständige Umsetzung der Metallcarbonyle sowie Abtrennung der Sulfide.

Die Entfernung der aus den Metallcarbonylen, d. h. vor allem aus dem Eisenpentacarbonyl Fe(CO)₅ und dem Nickeltetracarbonyl Ni(CO)₄ entstehenden, feindispersen oder kolloidalen Metallsulfiden ist deshalb bei der Rectisol-Gaswäsche ein dringliches Problem, um ihre Ablagerungen in der Trennkolonne und anderen Anlagenteilen zu verhindern. Für die meisten der gefährdeten Anlagenteile sind inzwischen schon Lösungen erarbeitet worden, die eine Reinigung während der planmäßigen Stillstände ermöglichen. Die Lösungen zur Beherrschung von Ablagerungen von kolloidalen Metallsulfiden auf den Böden der Methanol-Wasser-Kolonne sind bislang noch verbesserungsfähig.

In der deutschen Patentschrift DE 103 366 77 B4 wird vorgeschlagen, zum Entfernen der Metallsulfide die Waschlösung vor Einleiten in die Methanol-Wasser-Kolonne zunächst in einen Fällungsbehälter einzuleiten, in dem die aus den Metallcarbonylen gebildeten kolloidalen Metallsulfide durch Erhitzen zu größeren Partikeln agglomerieren, die anschließend zusammen mit dem Sumpfprodukt aus der Trennkolonne ausgeschieden werden. Nachteilig ist dabei der erhöhte Ausrüstungsaufwand für den benötigten Fällungsbehälter. Ferner erhöht sich der Betriebsaufwand, da die benötigten Fällungsbedingungen, z. B. Temperatur und Verweilzeit, in dem Fällungsbehälter eingestellt werden müssen. Ebenfalls nachteilig ist der mit der Aufstellung eines Fällungsbehälters verbundene erhöhte Platzbedarf innerhalb der Gaswäscheanlage.

### Beschreibung der Erfindung

Aufgabe der Erfindung ist es daher, ein Verfahren anzugeben, das die genannten Nachteile der aus dem Stand der Technik bekannten Verfahren vermeidet und bei dem insbesondere die Metallsulfide entweder beseitigt oder in eine Form überführt werden, die nicht mehr zu Anbackungen in den verschiedenen Geräteteilen und den Kolonnenböden führt.

Diese Aufgabe wird durch ein Verfahren mit den Merkmalen des Anspruchs 1 gelöst. Weitere, insbesondere bevorzugte Ausgestaltungen des erfindungsgemäßen Verfahrens finden sich in den Unteransprüchen, Die Erfindung betrifft ferner eine Anlage zur Durchführung eines solchen Verfahrens (Anspruch 10).

Unter einer Zugabe von Wasser direkt in die Zuleitung zu der Methanol-Wasser-Trennkohnne wird die Abwesenheit von Misch-, Puffer-, Fällungs- öder sonstig gen Behältern verstanden, die dem Inkontaktbringen des zugegebenen Wassers mit dem wasserhaltigen Methanol vor Eintritt in die Trennkolonne dienen.

Unter einer methanolreichen oder wasserreichen Umgebung wird eine flössige Phase verstanden, in der die jeweilige Komponente überwiegt und insbesondere eine höhere Konzentration aufweist als die andere Komponente. Ein Methanol und Wasser enthaltendes. Stoffsystem würde demnach als methanolreich bezeichnet, wenn der Stoffmengenanteil an Methanol größer ist als derjenige von Wasser.

Der Fachmann ist in der Lage, den Grad der Überführung der Metafisulfide von einer methanolreichen oder wasserreichen Umgebung durch Probenahme und Routinemessungen zu messen. Entsprechende Analysenverfahren sind aus dem Stand der Technik bekannt.

Unter Fluidverbindung zwischen zwei Bereichen wird jegliche Art von Verbindung verstanden, die es ermöglicht, dass ein Fluid, beispielsweise das flüssige Waschmittel, von dem einen zu dem anderen der beiden B strömen kann, unbeachtlich etwaiger zwischengeschalteter Bereiche, Bauteile. Armaturen oder Vorrichtungen.

Etwaige Druckangaben in der Einheit bar(a) beziehen sich auf den Absolutdruck in bar, absolut, sofern nicht im Einzelfall anders angegeben.

Der Erfindung liegt die Erkenntnis zugrunde, dass Metallsulfidpartikel in methanolreicher Umgebung und wasserreicher Umgebung ein unterschieldliches Verhalten aufweisen. In methanolreicher Umgebung bleiben die Metallsulfidpartikel überwiegend dispergiert, weisen also nur wenig Sedmentationsneigung auf, aber besitzen eine Neigung zur Adhäsion an Oberflächen. In wasserreicher Umgebung erfolgt dagegen bevorzugt eine Agglomeration kleiner Metallsulfidpartikel zu größeren Aggregaten, die ausfallen und keine oder nur eine geringere Adhäsionsneigung aufweisen. Überraschenderweise kann dieser Effekt direkt in der Methanol-Wasser6-Trennkolonne ausgenutzt werden. ohne das ein Vorschalten eines Fällungsbehälters erforderlich ist.

### Bevorzugte Ausgestaltungen der Erfindung

Eine bevorzugte Ausgestaltung des erfindungsgemäßen Verfahrens ist dadurch gekennzeichnet, dass bei den Verfahrensschritten e) oder f) die Zugabe von Wasser in der Weise erfolgt, dass die Verweilzeit der erhaltenen Mischung in der Zuleitung vor Einleiten in die Metharrol-Wasser-Trennkokanne ausreicht, um eine Oberführung der Metallsulfide von mindestens 50 %, bevorzugt mindestens 90 %. meist bevorzugt mindestens 95 % von einer methanolreichen Umgebung in eine wasserreiche Umgebung zu bewirken. Bei der Überführung der Metallsulfidpartikel von der methanolrichen Umgebung in eine wasserreiche Umgebung wird das oben dargelegte Verhalten der Metallsulfidpartikel beobachtet dass umso ausgeprägter auftritt, je vollständiger die Überführung der Metallsulfide verläuft. Entsprechend sinkt mit zunehmendem Überführungsgrad der Restgehalt an Metallsulfidpartikeln in der methanolreichen Umgebung und somit auch die Gefahr der Bildung von Anbackungen in Testen der Methanol-Wasser-Kolonne.

Als besonders vorteilhaft hat es sich herausgestellt wenn sich beim Verfahrensschritt e) oder f)
die Zugabestelle des Wassers in die Zuleitung des an aciden Gasbestandteilen abgereicherten, Wasser und Metallsulfide enthaltenden Methanol-Teilstroms so angeordnet wird, dass eine Verweilzeit von mindestens 5 s, vorzugsweise mindestens 10 s vor Eintritt in die Methanol-Wasser-Trennkolonne eingehalten wird, wobei die Strömungsgeschwindigkeit des Methanol-Wasser-Gemischs in der Zuleitung zwischen 0,5 und 2,0 m/s, bevorzugt zwischen 1,0 und 1,5 m/s beträgt. Untersuchungen zeigen, dass bei Berücksichtigung dieser Kriterien eine besonders effektive Abtrennung der Metallsulfidpartikel gemeinsam mit dem wasserhaltigen Sumpfprodukt der Methanol-Wasser-Trennkolonne möglich ist.

In der Praxis ergibt es sich, dass bei einer Anordnung der Zugabestelle des Wassers in die Zuleitung mindestens 5 m stromaufwärts der Methanol-Wasser-Trennkolonne zumeist eine gute Durchmischung erhalten wird.

In bevorzugter Verfahrenausgestaltung beträgt beim Verfahrensschritt f) die durch direktes Einspritzen in die Methanol-Wasser-Trennkolonne an mindestens einer Stelle zugegebene Wassetmenge zwischen 3 und 50 %, bevorzugt zwischen 5 und 15 % dar Feedmenge der Methanol-Wasser-Trennkolonne, also der zugeführten Menge des aufzutrennenden Methanol-Wasser-Gemischs. Untersuchungen zeigen, dass bei Einhalten dieser Mindestinjektionsmenge eine besonders effektive Abtrennung der Metallsulfidpartikel gemeinsam mit dem wasserhaltigen Sumpfprodukt der Methanol-Wasser-Trennkolonne möglich ist.

Aus Betriebserfahrungen geht hervor, dass unter üblichen Betriebsbedingungen der Methanol-Wasser-Trennkolonne bei einem Einspritzen von mindestens 100 l/h Wasser pro Injektionspunkt die Bildung von Anbackungen bzw. Ablagerungen durch Metallsulfide sicher verhindert wird.

In einem weiteren Aspekt des erfindungsgemäßen Verfahrens werden die Metallsulfide mit dem wasserhaltigen Sumpfprodukt der Methanol-Wasser-Trennkolonne aus dem Verfahren ausgeleitet. Dies ist mögich, da es trotz der erhöhten Agglomerationsnigung kleiner Metallsulfidpartikel zu größeren Aggregaten in der wasserreichen Umgebung überraschenderweise nicht zur Bildung sehr großer, nicht mehr aus dem Kolonnensumpf ausleitbarer Metallsulfidaggregate kommt. Vielmehr können die Metallsulfidpartikel problemlos gemeinsam mit dem wasserhaltigen Sumpfprodukt der Methanol-Wasser-Trannkolonne mit üblichen Fördervorrichtungen, beispielsweise Pumpen, aus dem Verfahren ausgeleitet werden.

Eine weitere, bevorzugte Verfahrensausgestaltung ist dadurch gekennzeichnet. dass für die Wasserzugabe in Verfahrensschritt e) oder f) mindestens ein wasserhaltiger Strom ausgewählt aus der folgenden Gruppe verwendet wird: Wasser aus einem CO₂-Abgaswäscher, Sumpfprodukt der Methanol-Wasser-Trennkolonne, Frischwasser, demineralisiertes Wasser. Alle diese wasserhaltigen Ströme sind geeignet, um das oben beschriebene Agglomerationsverhalten der Metallsulfidpartikel hervorzurufen. Dies gilt für die jeweiligen wasserhaltigen Ströme allein oder in Mischung mit anderen wasserhaltigen Ströme aus der genannten Gruppe.

In weiterer bevorzugter Verfahrensausgestaltung weist der für die Wasserzugabe in Verfahrensschritt e) oder f) verwendete Wasserstrom eine Temperatur zwischen 10 und 1140 °C, bevorzugt zwischen 60 und 120 °C auf. Untersuchungen zeigen, dass innerhalb der genannten Temperaturbereiche eine besonders effektive Abtrennung der Metallsulfidpartikel gemeinsam mit dem wasserhaltigen Sumpfprodukt der Methanol-Wasser-Trennkölonne möglich ist.

### Ausführungsbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung.

### Es zeigt die einzige Figur

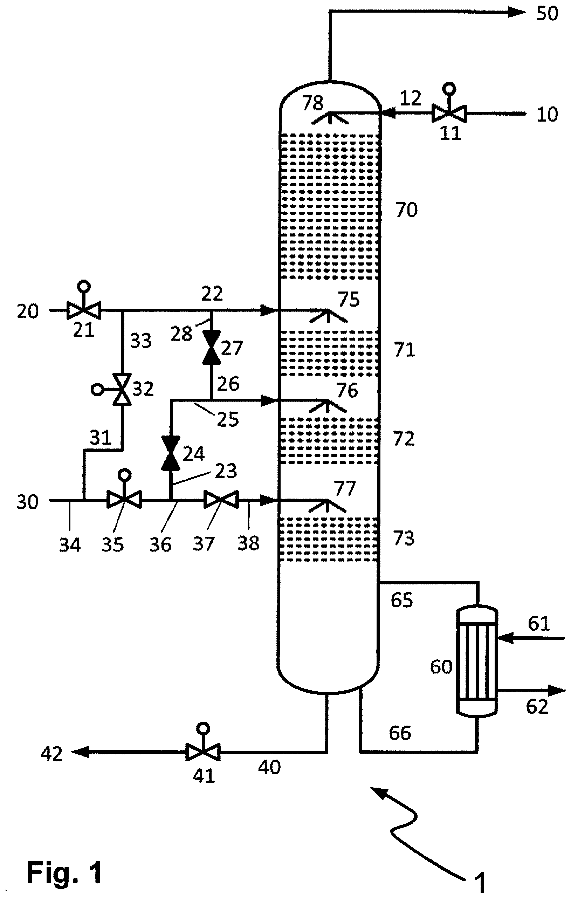

- Fig. 1: eine schematische Darstellung einer beispielhaften Ausgestaltung des erfindungsgemäßen Verfahrens bzw. der erfindungsgemäßen Anlage.

Fig. 1 zeigt schematisch eine Methanol-Wasser-Trennkolonne 1 innerhalb der Waschmittelaufarbeitung einer nach dem Rectisol-Verfahren arbeitenden Anlage zur Gaswäsche von Rohsynthesegas mit tiefkaltem Methanol.

Über Leitung 10, Regelventil 11 und Leitung 12 wird regeneriertes Methanol-Waschmittel aus der Methanol-Heissregenerierung (in der Figur bildlich nicht dargestellt) zu der Trennkolonne geführt und dieser in deren oberen Teil in der Nähe des Kolonnenkopfs über Flüssigkeitsverteiler 78 aufgegeben. Ferner zu wird der Trennkolonne 1 über Leitung 20, Regelventil 21 und Leitung 22 ein ebenfalls aus der Methanol-Heissregenerierung stammendes Methanol-Wasser-Gemisch herangeführt und dieser im mittleren Kolonnenbereich über Flüssigkeitsverteiler 75 aufgegeben.

Die Trennkolonne 1 ist im vorliegenden Ausführungsbeispiel mit strukturierten Packungssegmenten 70, 71, 72, 73 ausgestattet, mit deren Hilfe die Einstellung des Dampf-Flüssigkeits-Gleichgewichts der beteiligten Komponenten erfolgt. Alternativ könnte die Trennkolonne auch mit Böden oder Füllkörperschüttungen ausgestattet werden; dies hat keinen wesentlichen Einfluss auf die Funktionsweise der Erfindung. Die für die destillative Auftrennung des Methanol-Wasser-Gemischs erforderliche Energiezufuhr wird über Aufkocher 60 gewährleistet, in dem ein Teil des über Leitung 66 herangeführten Sumpfprodukts verdampft und der Dampf bzw. das erhitzte Dampf-Flüssigkeitsgemisch über Leitung 65 zu der Trennkolonne zurückgeführt wird. Die Beheizung des Aufkochers erfolgt mittels Wasserdampf, der über Leitung 61 dem Aufkocher aufgegeben wird. Das dabei anfallende Kondensat wird über Leitung 62 abgeführt.

Über Leitung 50 wird vom Kopf der Trennkolonne an Wasser abgereicherter Methanoldampf abgezogen und zu der Methanol-Heissregenerierung zurückgeführt. Das Ausleiten des an Wasser angereicherten Sumpfprodukts erfolgt über Leitung 40, Regelventil 41 und Leitung 42. Das Sumpfprodukt wird einer in der Figur nicht bildlich dargestellten Aufarbeitung zugeführt oder aus dem Verfahren entfernt.

Erfindungsgemäß wird nun zusätzlich über Leitung 30 demineralisiertes Wasser herangeführt. Dieses stammt im vorliegenden Beispiel aus einem Gaswäscher, mit dessen Hilfe Methanolspuren aus dem aus der Rectisol-Anlage ausgeführten CO₂-Strom vor dessen Abgabe an die Atmosphäre entfernt wurden, Das deminerallslerte Wasser wird über Leitung 34, Regelventil 35, Leitung 36, Absperrventil 37 und Leitung 38 zu der Trennkolonne 1 geführt und dieser über Flüssigkeitswerteiller 77 aufgegeben.

Zusätzlich wird ein Teilstrom des über Leitung 30 herangef¨hrten Wasserstroms über Leitung 31, Regelventil 32 und Leitung 33 zu dem über Leitung 20 hefangeführten Methanol-Wasser-Gemisch geletel und mit diesem in Leitung 22 zusammengeführt

Auch kann der gesamte über Leitung 30 herangeführte Wasserstrom über Leitung 31, Regelventil 32 und Leitung 33 zu dem über Leitung 20 herangeführten Methanol-Wasser-Gemisch geleitet und mit diesem in Leitung 22 zusammengeführt werden.

Der Wasserstrom oder Teilstrom tritt dann gef meinsam mit dem Methanol-Wasser-Gemi=h über Flüssigkeitsverteiler 75 in die Trennkokonne ein.

Ferner kann durch entsprechendes Öffnen bzw. Schießen der Absperrventile 24, 27ᵢ 37 auch ein Teistrom über den Leitungweg 30. 34. 36) 23, 25 und Flüssigkeitsverteiler 76 in die Trennkolonne eingebracht werden. Auch die Wasserzufuhr über den Leitungsweg 26, 28, 22 ist möglich. Um eine fernere Regulier rung bzw, bessere Verteilung des Wassers auf die Flüssigkeitsverteiler zu enrmöglichen, können ein oder mehrere Absperrventile auch durch Regelventile ersetzt werden.

Die Auswahl der Wasserzugabestellen über die Flüssigkeitsverteiler 75, 76, 77 wind insbesondere davon abhängen, weiche Teile der Trennkolonne besonders stark durch Ablagerungen oder Anbackungen von Metallsulfidpartikeln betroffen sind. Dies basiert auf entsprechender Betriebserfahrung oder kann durch entsprechende Versuche ohne Wasserrugabe ermittelt werden.

### Gewerbliche Anwendbarkeit

Mit der Erfindung wird ein Gaswaschverfahren zur Abtrennung acider Gasbestandteile aus Metallcarbonyle enthaltendem Synthesegas zur Verfügung gestellt, das es ermöglicht, die aus den Metallcarbonylen entstehenden Metallsulfidpartikel sicher über den Kolonnensumpf der Methanol-Wasser-Trennkolonne auszuleiten, ohne dass es in dieser zu Anbackungen oder Verlegungen kommt und ohne dass zusätzliche Ausrüstungsteile wie beispielsweise Fällungsbehälter benötigt werden.

### Bezugszeichenliste

- 1: Trennkolonne
- 10: Leitung
- 11: Regelventil
- 12: Leitung
- 20: Leitung
- 21: Regelventil
- 22: Leitung
- 23: Leitung
- 24: Absperrventil
- 25: Leitung
- 26: Leitung
- 27: Absperrventil
- 28: Leitung
- 30: Leitung
- 31: Leitung
- 32: Regelventil
- 33: Leitung
- 34: Leitung
- 35: Regelventil
- 36: Leitung
- 37: Absperrventil
- 38: Leitung
- 40: Leitung
- 41: Regelventil
- 42: Leitung
- 50: Leitung
- 60: Aufkocher
- 61: Leitung
- 62: Leitung
- 65: Leitung
- 66: Leitung
- 70: strukturierte Packung
- 71: strukturierte Packung
- 72: strukturierte Packung
- 73: strukturierte Packung
- 75: Flüssigkeitsverteiler
- 76: Flüssigkeitsverteiler
- 77: Flüssigkeitsverteiler
- 78: Flüssigkeitsverteiler

## Patentansprüche

1. Verfahren zur Abtrennung von Kohlendioxid (CO₂) und Schwefelwasserstoff (H₂S), aus einem CO₂, H₂S, Wasser und Metallcarbonyle enthaltenden Rohsynthesegas mit Methanol als Waschmittel, umfassend folgende Schritte:
a) Zuführen des Rohsynthesegas zu einer Absorptionsvorrichtung,
b) Inkontaktbringen des Rohsynthesegases mit einem kalten Methanol-Teilstrom und mit mindestens einem weiteren, aus nachgeschalteten Verfahrensstufen rückgeführten Methanol-Teilstrom in der Absorptionsvorrichtung, wobei ein an aciden Gasbestandteilen, Wasser und Metallcarbonylen abgereicherter Produktgasstrom erhalten wird, der aus dem Verfahren ausgeleitet wird und wobei ein mit aciden Gasbestandteilen, Wasser und Metallcarbonylen beladener Methanol-Teilstrom erhalten wird,
c) mehrstufige Regenerierung des beladenen Methanol-Teilstroms durch Druckerniedrigung (Flashen) und/oder Temperaturerhöhung (Heissregenerierung), wobei mindestens ein regenerierter Methanol-Teilstrom erhalten wird, der nach Verfahrensschritt b) zurückgeführt wird, wobei ferner ein oder mehrere Kohlendioxid und/oder Schwefelwasserstoff enthaltende Gasströme erhalten werden, die aus dem Verfahren ausgeleitet werden, und wobei ein an aciden Gasbestandteilen abgereicherter, Wasser und Metallsulfide enthaltender Methanol-Teilstrom erhalten wird,
d) Einleiten des an aciden Gasbestandteilen abgereicherten, Wasser und Metallsulfide enthaltenden Methanol-Teilstroms in eine Methanol-Wasser-Trennkolonne, destillative Auftrennung desselben in der Methanol-Wasser-Trennkolonne in ein methanolhaltiges Kopfprodukt, das mindestens teilweise zu Verfahrensschritt b) und/oder Schritt c) zurückgeführt wird, und in ein wasserhaltiges Sumpfprodukt, das aus dem Verfahren ausgeleitet wird, **dadurch gekennzeichnet, dass**
e) direkt in die Zuleitung des an aciden Gasbestandteilen abgereicherten, Wasser und Metallsulfide enthaltenden Methanol-Teilstroms vor dessen Einleiten in die Methanol-Wasser-Trennkolonne Wasser zugegeben wird oder dass
f) direkt in die Zuleitung des an aciden Gasbestandteilen abgereicherten, Wasser und Metallsulfide enthaltenden Methanol-Teilstroms vor dessen Einleiten in die Methanol-Wasser-Trennkolonne Wasser zugegeben wird und direkt in die Methanol-Wasser-Trennkolonne an mindestens einer Stelle Wasser eingespritzt wird,
wobei unter einer Zugabe von Wasser direkt, in die Zuleitung zu der Methanol-Wasser-Trennkolonne die Abwesenheit von Misch-, Puffer-, Fällungs- oder sonstigen Behältem verstanden wird, die dem Inkontaktbringen des zugegebenen Wassers mit dem wasserhaltigen Methanol vor Eintritt in die Trennkilonne dienen.

2. Verfahren nach Anspruch 1, **dadurch gekennzeichnet, dass** beim Verfahrensshritt e) oder f) die Zugabe von Wasser in der Weise erfolgt, dass die Verweilzeit der erhaltenen Mischung in der Zuleitung vor Einleiten in die Methanol-Wasser-Trennkolonne ausreicht, um eine Überführung der Matallsulfide von mindestens 50 %, bevorzugt mindestens 90 %, meist bevorzugt mindestens 95 % von einer methanolreichen Umgebung In eine wasserreiche Umgebung zu bewirken.

3. Verfahren nach Anspruch 1 oder 2, **dadurch gekennzeichnet, dass** sich beim Verfahrensschritt e) oder f)
die Zugabestelle des Wassers in die Zuleitung des an aciden Gasbestandteilen abgereicherten, Wasser und Metallsulfide enthaltenden Methanol-Teilstroms so angeordnet wird, dass eine Verweilzeit von mindestens 5 s, vorzugsweise mindestens 10 s vor Eintritt in die Methanol-Wasser-Trennkolonne eingehalten wird, wobei die Strömungsgeschwindigkelt des Methanol-Wasser-Gemischs in der Zuleitung zwischen 0,5 und 2,0 m/s, bevorzugt zwischen 1,0 und 1,5 m/s beträgt.

4. Verfahren nach Anspruch 3, **dadurch gekennzeichnet, dass** sich beim Verfahrensschitt e) oder f)
die Zugabestelle des Wassers in die Zuleitung des an aciden Gasbestandteilen abgereicherten, Wasser und Metallsulfide enthaltenden Methanol-Teilsfroms mindestens 5 m stromaufwärts von der Methanol-Wassar-Trennkolonne befindet.

5. Verfahren nach einem der vorigen Ansprüche, **dadurch gekennzeichnet, dass** beim Verfahrensschritt f) die durch direktes Einspritzen in die Methanol-Wasser-Trennkolonne an mindestens einer Stelle zugegebene Wassermenge zwischen 3 und 50 %, bevorzugt zwischen 5 und 15 % der Feedmenge der Methanol-Wasser-Trennkolonne beträgt.

6. Verfahren nach Anspruch 5, **dadurch gekennzeichnet, dass** pro Injektionspunkt mindestens 100 l/h Wasser eingespritzt werden.

7. Verfahren nach einem der vorigen Ansprüche, **dadurch gekennzeichnet, dass** die Metallsulfide mit dem wasserhaltigen Sumpfprodukt der Methanol-Wasser-Trennkolonne aus dem Verfahren ausgeleitet werden.

8. Verfahren nach einem der vorigen Ansprüche, **dadurch gekennzeichnet, dass** für die Wasserzugabe in Verfahrensschritt e) oder f) mindestens ein wasserhaltiger Strom, ausgewählt aus der folgenden Gruppe verwendet wird: Wasser aus einem CO₂-Abgaswäscher, Sumpfprodukt der Methanol-Wasser-Trennkolonne, Frischwasser, demineralisiertes Wasser.

9. Verfahren nach einem der vorigen Ansprüche, **dadurch gekennzeichnet, dass** der für die Wasserzugabe in Verfahrensschritt e) oder f) verwendete Wasserstrom eine Temperatur zwischen 10 und 140 °C, bevorzugt zwischen 60 und 120 °C aufweist.

10. Anlage zur Abtrennung von Kohlendioxid (CO₂) und Schwefelwasserstoff (H₂S), aus einem CO₂, H₂S, Wasser und Metallcarbonyle enthaltenden Rohsynthesegas mit Methanol als Waschmittel, umfassend folgende, miteinander in Fluidverbindung stehende Bestandteile und Baugruppen:
a) Mittel zum Zuführen des Rohsynthesegas zu einer Absorptionsvorrichtung,
b) eine Absorptionsvorrichtung, Mittel zum Zuführen des Rohsynthesegases, eines kalten Methanol-Teilstroms und mindestens eines weiteren, aus nachgeschalteten Verfahrensstufen rückgeführten Methanol-Teilstroms zu der Absorptionsvorrichtung, Mittel zum Ausleiten eines an aciden Gasbestandteilen, Wasser und Metallcarbonylen abgereicherten Produktgasstroms und eines mit aciden Gasbestandteilen, Wasser und Metallcarbonylen beladener Methanol-Teilstroms,
c) eine oder mehrere Vorrichtungen zur mehrstufigen Regenerierung des beladenen Methanol-Teilstroms durch Druckerniedrigung (Flashen) und/oder Temperaturerhöhung (Helssregenerierung), Mittel zum Zuführen des beladenen Methanol-Teilstroms zu den Regenerierungsvorrichtungen, Mittel zum Rückführen mindestens eines regenerierten Methanol-Teilstroms zu der Absorptionsvorrichtung, Mittel zum Ausleiten eines oder mehrerer Kohlendioxid und/oder Schwefelwasserstoff enthallende Gasströme aus den Regenerierungsvorrichtungen, Mittel zum Ausleiten eines an aciden Gasbestandteilen abgereicheerten, Wasser und Metallsulfide enthaltenden Methanol-Teilstroms aus den Regenerierungsvorrichtungen,
d) eine Methanol-Wasser-Trennkolonne, Mittel zum Einleiten des an aciden Gasbestandteilen abgereicherten, Wasser und Metallsulfide enthaltenden Methanol-Teilstroms in die Methanol-Wasser-Trennkolonne, Mittel zum Ausleiten und Rückführen eines methanolhaltigen Kopfproduktes zu der Absorptionsvorrichtung und/oder zu den Regenerierungsvorrichtungen, Mittel zum Ausleiten eines wasserhaltigen Sumpfprodukts, **dadurch gekennzeichnet, dass** ferner Mittel umfasst werden, die
e) eine Zugabe von Wasser direkt in die Zuleitung des werden, Gasbestandteilen abgereicherten, Wasser und Metallsulfide enthaltenden Methanol-Teilstroms vor dessen Einleiten in die Methanol-Wasser-Trennkolonne gestalten oder die
f) eine Zugabe von Wasser direkt in die Zuleitung des an aciden Gasbestandteilen abgereicherten, Wasser und Metallsulfide enthaltenden Methenol-Teilstroms vor dessen Einleiten in die Methanol-Wasser-Trennkolonne gestatten und ein Einspritzen von Wasser direkt in die Methanol-Wasser-Trennkolonne an mindestens einer Stelle gestatten, wobei unter einer Zugabe von Wasser direkt in die Zuleitung zu der Methanol-Wasser-Trennkolonne die Abwesenheit von Misch-, Puffer-, Fällungs- oder sonstigen Behältem verstanden wird, die dem Inkontaktbringgendes zugegebenen Wassers mit dem wasserhaltigen Methanol vor Eintritt in die Trennkolonne dienen.

## Claims

1. Process for removal of carbon dioxide (CO₂) and hydrogen sulfide (H₂S) from a crude synthesis gas containing CO₂, H₂S, water and metal carbonyls, with methanol as scrubbing medium, comprising the following steps:
a) feeding the crude synthesis gas to an absorption device,
b) bringing the crude synthesis gas into contact with a cold methanol part-stream and with at least one further methanol part-stream returned from downstream process steps in the absorption device, wherein a product gas stream depleted of acidic gas components, water and metal carbonyls is obtained and is discharged from the process, and wherein a methanol part-stream laden with acidic gas components, water and metal carbonyls is obtained,
c) regenerating the laden methanol part-stream in multiple stages by pressure reduction (flashing) and/or temperature increase (hot regeneration), wherein at least one regenerated methanol part-stream is obtained which is returned to process step b), wherein furthermore one or more gas streams containing carbon dioxide and/or hydrogen sulfide are obtained and are discharged from the process, and wherein a methanol part-stream depleted of acidic gas components and containing water and metal sulfides is obtained,
d) introducing the methanol part-stream depleted of acidic gas components and containing water and metal sulfides into a methanol/water separating column, separating the said part-stream by distillation in the methanol/water separating column into a methanol-containing top product, which is at least partially returned to process step b) and/or step c), and into a water-containing bottom product, which is discharged from the process, **characterised in that**
e) water is added directly into the feed line of the methanol part-stream depleted of acidic gas components and containing water and metal sulfides before the introduction of the part-stream into the methanol/water separating column, or **in that**
f) water is added directly into the feed line of the methanol part-stream depleted of acidic gas components and containing water and metal sulfides before the introduction of the part-stream into the methanol/water separating column, and water is injected directly into the methanol/water separating column at at least one point, wherein an addition of water directly into the feed line to the methanol/water separating column is understood as the absence of containers for mixing, buffering, precipitation or other purposes which serve to bring the added water into contact with the water-containing methanol before entry into the separating column.

2. Process according to claim 1, **characterised in that** in process step e) or f) the addition of water takes place in such a way that the residence time of the obtained mixture in the feed line before introduction into the methanol/water separating column is sufficient to cause a transfer of at least 50%, preferably at least 90%, most preferably at least 95% of the metal sulfides from a methanol-rich environment into a water-rich environment.

3. Process according to claim 1 or 2, **characterised in that** in process step e) the point where the water is added into the feed line of the methanol part-stream depleted of acidic gas components and containing water and metal sulfides is arranged so that a residence time of at least 5 s, preferably at least 10 s before entry into the methanol/water separating column is maintained, wherein the flow velocity of the methanol/water mixture in the feed line is between 0.5 and 2.0 m/s, preferably between 1.0 and 1.5 m/s.

4. Process according to claim 3, **characterised in that** in process step e) the point where the water is added into the feed line of the methanol part-stream depleted of acidic gas components and containing water and metal sulfides is located at least 5 m upstream of the methanol/water separating column.

5. Process according to any of the preceding claims, **characterised in that** in process step f) the quantity of water added by direct injection into the methanol/water separating column at at least one point is between 3 and 50 %, preferably between 5 and 15 % of the feed quantity of the methanol/water separating column.

6. Process according to claim 5, **characterised in that** at least 100 l/h water are injected per injection point.

7. Process according to any of the preceding claims, **characterised in that** the metal sulfides are discharged from the process with the water-containing bottom product of the methanol/water separating column.

8. Process according to any of the preceding claims, **characterised in that** for the addition of water in process step e) or f) at least one water-containing stream selected from the following group is used: water from a CO₂ flue gas scrubber, bottom product from the methanol/water separating column, fresh water, demineralised water.

9. Process according to any of the preceding claims, **characterised in that** the water stream used for the addition of water in process step e) or f) has a temperature between 10 and 140°C, preferably between 60 and 120°C.

10. Apparatus for removal of carbon dioxide (CO₂) and hydrogen sulfide (H₂S) from a crude synthesis gas containing CO₂, H₂S, water and metal carbonyls with methanol as scrubbing medium, comprising the following components and assemblies in fluidic communication with one another:
a) means for feeding the crude synthesis gas to an absorption device,
b) an absorption device, means for feeding the crude synthesis gas, a cold methanol part-stream and at least one further methanol part-stream returned from downstream process steps to the absorption device, means for discharging a product gas stream which is depleted of acidic gas components, water and metal carbonyls and a methanol part-stream which is laden with acidic gas components, water and metal carbonyls,
c) one or more devices for multi-stage regeneration of the laden methanol part-stream by pressure reduction (flashing) and/or temperature increase (hot regeneration), means for feeding the laden methanol part-stream to the regeneration devices, means for returning at least one regenerated methanol part-stream to the absorption device, means for discharging one or more gas streams containing carbon dioxide and/or hydrogen sulfide from the regeneration devices, means for discharging a methanol part-stream from the regeneration devices, which part-stream is depleted of acidic gas components and contains water and metal sulfides,
d) a methanol/water separating column, means for introducing the methanol part-stream depleted of acidic gas components and containing water and metal sulfides into the methanol/water separating column, means for discharging and returning a methanol-containing top product to the absorption device and/or to the regeneration devices, means for discharging a water-containing bottom product, **characterised in that** furthermore means are comprised which
e) allow an addition of water directly into the feed line of the methanol/water part-stream depleted of acidic gas components and containing water and metal sulfides before the introduction of the part-stream into the methanol/water separating column, or which
f) allow an addition of water directly into the feed line of the methanol part-stream depleted of acidic gas components and containing water and metal sulfides before introduction of the part-stream into the methanol/water separating column, and injection of water directly into the methanol/water separating column at at least one point, wherein an addition of water directly into the feed line to the methanol/water separating column is understood as the absence of containers for mixing, buffering, precipitation or other purposes which serve to bring the added water into contact with the water-containing methanol before entry into the separating column.

## Revendications

1. Procédé de séparation de dioxyde de carbone (CO₂) et d'hydrogène sulfuré (H₂S), à partir d'un gaz de synthèse brut contenant du CO₂, du H₂S, de l'eau et des carbonyles métalliques avec du méthanol comme moyen de lavage, comprenant les étapes suivantes :
a) amenée du gaz de synthèse brut à un dispositif d'absorption,
b) mise en contact du gaz de synthèse brut avec un courant partiel de méthanol froid et avec au moins un autre courant partiel de méthanol recyclé à partir d'étapes de procédé en aval dans le dispositif d'absorption, dans lequel un courant de gaz de produit enrichi en constituants de gaz acides, eau et carbonyles métalliques est obtenu, qui est dérivé du procédé et dans lequel un courant partiel de méthanol chargé en constituants de gaz acides, eau et carbonyles métalliques est obtenu,
c) régénération en plusieurs étapes du courant partiel de méthanol chargé par diminution de pression (détente) et/ou augmentation de température (régénération à chaud), dans lequel au moins un courant partiel de méthanol régénéré est obtenu, qui est recyclé après l'étape de procédé b), dans lequel en outre un ou plusieurs courants de gaz contenant du dioxyde de carbone et/ou de l'hydrogène sulfuré sont obtenus, qui sont dérivés du procédé, et dans lequel un courant partiel de méthanol contenant de l'eau et des sulfures métalliques, enrichi en constituants de gaz acides est obtenu,
d) introduction du courant partiel de méthanol contenant de l'eau et des sulfures métalliques, enrichi en constituants de gaz acides dans une colonne de séparation de méthanol et d'eau, séparation par distillation de celui-ci dans la colonne de séparation de méthanol et d'eau dans un produit de tête contenant du méthanol qui est recyclé au moins partiellement à l'étape de procédé b) et/ou l'étape c), et dans un produit de bas de colonne contenant de l'eau qui est dérivé du procédé, **caractérisé en ce que**
e) de l'eau est ajoutée directement dans la conduite d'alimentation du courant partiel de méthanol contenant de l'eau et des sulfures métalliques, enrichi en constituants de gaz acides avant l'introduction de celui-ci dans la colonne de séparation de méthanol et d'eau ou **en ce que**
f) de l'eau est ajoutée directement dans la conduite d'alimentation du courant partiel de méthanol contenant de l'eau et des sulfures métalliques, enrichi en constituants de gaz acides avant l'introduction de celui-ci dans la colonne de séparation de méthanol et d'eau et de l'eau est injectée directement dans la colonne de séparation de méthanol et d'eau sur au moins un point,
dans lequel l'absence de récipients de mélange, de tampon, de précipitation ou autre est comprise comme un ajout d'eau directement dans la conduite d'alimentation à la colonne de séparation de méthanol et d'eau, qui servent à la mise en contact de l'eau ajoutée avec le méthanol contenant de l'eau avant l'entrée dans la colonne de séparation.

2. Procédé selon la revendication 1, **caractérisé en ce que** lors de l'étape de procédé e) ou f) l'ajout d'eau est effectué de telle manière que le temps de séjour du mélange obtenu dans la conduite d'alimentation avant l'introduction dans la colonne de séparation de méthanol et d'eau suffit afin de provoquer un transfert des sulfures métalliques d'au moins 50 %, de préférence d'au moins 90 %, la plupart du temps de préférence d'au moins 95 % d'un environnement riche en méthanol dans un environnement riche en eau.

3. Procédé selon la revendication 1 ou 2, **caractérisé en ce que** lors de l'étape de procédé e) ou f)
le point d'ajout de l'eau dans la conduite d'alimentation du courant partiel de méthanol contenant de l'eau et des sulfures métalliques, enrichi en constituants de gaz acides est agencé de sorte qu'un temps de séjour d'au moins 5 s, de préférence d'au moins 10 s soit respecté avant l'entrée dans la colonne de séparation de méthanol et d'eau, dans lequel la vitesse d'écoulement du mélange de méthanol et d'eau dans la conduite d'alimentation est comprise entre 0,5 et 2,0 m/s, de préférence entre 1,0 et 1,5 m/s.

4. Procédé selon la revendication 3, **caractérisé en ce que** lors de l'étape de procédé e) ou f)
le point d'ajout de l'eau dans la conduite d'alimentation du courant partiel de méthanol contenant de l'eau et des sulfures métalliques, enrichi en constituants de gaz acides se trouve au moins 5 m en amont de la colonne de séparation de méthanol et d'eau.

5. Procédé selon l'une quelconque des revendications précédentes, **caractérisé en ce que** lors de l'étape de procédé f), la quantité d'eau ajoutée par injection directe dans la colonne de séparation de méthanol et d'eau sur au moins un point est comprise entre 3 et 50 %, de préférence entre 5 et 15 % de la quantité d'alimentation de la colonne de séparation de méthanol et d'eau.

6. Procédé selon la revendication 5, **caractérisé en ce qu'**au moins 100 l/h d'eau sont injectés par point d'injection.

7. Procédé selon l'une des revendications précédentes, **caractérisé en ce que** les sulfures métalliques avec le produit de bas de colonne contenant de l'eau de la colonne de séparation de méthanol et d'eau sont dérivés du procédé.

8. Procédé selon l'une des revendications précédentes, **caractérisé en ce que** pour l'ajout d'eau dans l'étape de procédé e) ou f) au moins un courant contenant de l'eau sélectionné à partir du groupe suivant est utilisé : eau d'un laveur de CO₂-gaz d'échappement, produit de bas de colonne de la colonne de séparation de méthanol et d'eau, eau douce, eau déminéralisée.

9. Procédé selon l'une des revendications précédentes, **caractérisé en ce que** le courant d'eau utilisé pour l'ajout d'eau dans l'étape de procédé e) ou f) présente une température entre 10 et 140 °C, de préférence entre 60 et 120 °C.

10. Installation de séparation de dioxyde de carbone (CO₂) et d'hydrogène sulfuré (H₂S) à partir d'un gaz de synthèse brut contenant du CO₂, du H₂S, de l'eau et des carbonyles métalliques avec du méthanol comme moyen de lavage, comprenant des constituants et assemblages suivants se trouvant en liaison fluidique entre eux :
a) des moyens pour l'amenée du gaz de synthèse brut à un dispositif d'absorption,
b) un dispositif d'absorption, des moyens d'amenée du gaz de synthèse brut, d'un courant partiel de méthanol froid et au moins d'un autre courant partiel de méthanol recyclé des étapes de procédé en aval au dispositif d'absorption, des moyens de dérivation d'un courant de gaz de produit enrichi en constituants de gaz acides, eau et carbonyles métalliques et d'un courant partiel de méthanol chargé en constituants de gaz acides, eau et carbonyles métalliques,
c) un ou plusieurs dispositifs de régénération à plusieurs étapes du courant partiel de méthanol chargé par diminution de pression (détente) et/ou augmentation de température (régénération à chaud), des moyens d'amenée du courant partiel de méthanol chargé aux dispositifs de régénération, des moyens de recyclage d'au moins un courant partiel de méthanol régénéré au dispositif d'absorption, des moyens de dérivation d'un ou plusieurs courants de gaz contenant du dioxyde de carbone et/ou d'hydrogène sulfuré des dispositifs de régénération, des moyens de dérivation d'un courant partiel de méthanol contenant de l'eau et des sulfures métalliques, enrichi en constituants de gaz acides à partir des dispositifs de régénération,
d) une colonne de séparation de méthanol et d'eau, des moyens d'introduction du courant partiel de méthanol contenant de l'eau et des sulfures métalliques, enrichi en constituants de gaz acides dans la colonne de séparation de méthanol et d'eau, des moyens de dérivation et de retour d'un produit de tête contenant du méthanol au dispositif d'absorption et/ou aux dispositifs de régénération, des moyens de dérivation d'un produit de bas de colonne contenant de l'eau, **caractérisé en ce que** des moyens sont de plus compris, qui
e) permettent un ajout d'eau directement dans la conduite d'alimentation du courant partiel de méthanol contenant de l'eau et des sulfures métalliques, enrichi en constituants de gaz acides avant son introduction dans la colonne de séparation de méthanol et d'eau ou qui
f) permettent un ajout d'eau directement dans la conduite d'alimentation du courant partiel de méthanol contenant de l'eau et des sulfures métalliques, enrichi en constituants de gaz acides avant son introduction dans la colonne de séparation de méthanol et d'eau et permettent une injection d'eau directement dans la colonne de séparation de méthanol et d'eau sur au moins un point, dans lequel l'absence de récipients de mélange, tampon, de précipitation ou autres comprise comme un ajout d'eau directement dans la conduite d'alimentation à la colonne de séparation de méthanol et d'eau, lesquels servent à la mise en contact de l'eau ajoutée avec le méthanol contenant de l'eau avant l'entrée dans la colonne de séparation.
